# EUROPÄISCHE PATENTSCHRIFT

(11) **EP 3 132 388 B1**
(45) Veröffentlichungstag und Bekanntmachung des Hinweises auf die Patenterteilung: **05.08.2020**
(21) Anmeldenummer: 15716509.3
(22) Anmeldetag: 13.04.2015
(51) Int. Cl.: G06K 19/073

(54) **VORRICHTUNG ZUM SCHUTZ VON DATENDIEBSTAHL, IDENTITÄTS- UND ZAHLUNGSBETRUG BEI KONTAKTLOSER DATENÜBERTRAGUNG VIA ELEKTROMAGNETISCHE FUNKWELLEN**
DEVICE FOR THE PREVENTION OF DATA THEFT, IDENTITY AND PAYMENT FRAUDE WITH CONTACTLESS DATA COMMUNICATION VIA ELECTROMAGNETIC WAVES
APPAREIL POUR LA PRÉVENTION D'UN VOL DE DONNÉES, FRAUDE D'IDENTITÉ ET DE PAYEMENT LORS D'UNE TRANSMISSION SANS CONTACT DE DONNÉES PAR ONDES ÉLECTROMAGNÉTIQUES

(30) Priorität: 14.04.2014 CH 576142014
(43) Veröffentlichungstag der Anmeldung: 22.02.2017
(73) Patentinhaber: Feusi, Marco, 6204 Sempach (CH)
(72) Erfinder: Feusi, Marco, 6204 Sempach (CH)
(74) Vertreter: Hoffmann Eitle
(86) Internationale Anmeldenummer: PCT/EP2015/057942
(87) Internationale Veröffentlichungsnummer: WO 2015/158650

(56) Entgegenhaltungen:
- US-A1- 2007 289 775
- US-A1- 2009 067 150
- US-A1- 2013 099 005

## Beschreibung

### TECHNISCHES GEBIET

Die vorliegende Erfindung betrifft eine Vorrichtung zum Schutz vor Datendiebstahl, Identitäts- und Zahlungsbetrug bei kontaktloser Datenübertragung via elektromagnetischer Funkwellen. Immer häufiger sind auf Pässen, Kredit-, Debit-, Zutrittskontrollkarten etc. NFC/RFID Funkchips zu finden. Die Erfindung betrifft genauer ein Behältnis mit mehreren Innentaschen zur Aufnahme von mit jeweils einem RFID- oder NFC-Chip ausgestatteten Gegenständen.

### STAND DER TECHNIK

Die Erfindung bezieht sich auf Chipkarten (Gesundheitskarten/Krankenkassenkarten, Kreditkarten/Debitkarten, Fahrkartenausweise etc.), Ausweise (Pässe, Personalausweise, Mitarbeiterausweise, Zutrittskarten etc.) und Geldscheine der nächsten Generation, die mit NFC/RFID Funktechnik ausgestattet sind.

Im Allgemeinen werden hierfür GFID-Transponder genutzt, um die hierauf gespeicherten Daten per Funkübertragung an einen Empfänger zu senden sowie die von einem Sender übertragenen Daten mit dem RFID-Chip zu empfangen und zu speichern. Bei niedrigen Frequenzen geschieht dies induktiv über ein Nahfeld, bei höheren Frequenzen über ein elektromagnetisches Fernfeld. Die Entfernung, über die ein RFID-Transponder ausgelesen werden kann, schwankt aufgrund der Ausführung (passiv/aktiv), benutztem Frequenzband, Sendestärke und Umwelteinflüssen, zwischen wenigen Zentimetern und mehr als einem Kilometer.

Die einzelnen Arten der RFID-Transponder unterscheiden sich teilweise recht stark voneinander. Der Aufbau eines RFID-Transponders besteht jedoch prinzipiell aus einer Antenne, einem analogen Schaltkreis zum Empfangen und Senden (Transponder) sowie einem digitalen Schaltkreis und einem permanenten Speicherbaustein.

Sogenannte passive RFID-Transponder beziehen ihre Energie zur Übertragung der auf ihnen gespeicherten Informationen, im Gegensatz zu den aktiven Transpondern, die mit Batterie betrieben werden, aus den empfangenen Funkwellen des Sende- und Empfangsgerätes. Diese Funkwellen werden als "Continuous Wave" bezeichnet. Mit der Antenne des RFID/NFC -Chips, die gleichzeitig die Funktion einer Induktionsspule übernimmt, wird durch Induktion ein Kondensator geladen, welcher den RFID/NFC -Chip, im Englischen auch als "Tag" bezeichnet, mit Energie versorgt. Die "Continuous Wave" muss aufgrund der geringen Kapazität des Kondensators, durchgehend vom Lesegerät aufrechterhalten werden, während der "Tag" sich im Sende- oder Empfangsmodus befindet.

Ergänzend ist anzumerken, dass ein Lesegerät eine Chipkarte nur über die Vorder- oder Rückseite auslesen kann. D.h. über die Kanten können keine Daten ausgelesen werden.

DE 20 2010 016 341 U1 führt eine Vorrichtung zur Unterbindung unerwünschter drahtloser Kommunikation auf. In einem Schutzbehältnis werden drahtlos kommunikationsbefähigte transportable Vorrichtungen aufbewahrt. Das Schutzbehältnis ist dabei so beschaffen, dass es eine Kommunikation zwischen der Vorrichtung und der Außenwelt einschränkt oder verunmöglicht.

Aus DE 20 2006 002 284 U1 ist eine Abschirmvorrichtung zum Schutz gegen das Auslesen von Reisepässen, Ausweisen, Chipkarten und anderen Trägermedien, welche mit RFID-Funktechnologie ausgestattet sind, bekannt. Dabei wird mittels einer Abschirmhülle das Auslesen von RFID bestückten Ausweispapieren etc. verhindert.

Aus DE 20 2013 003 410 U1 ist eine Handyhülle mit RFID/NFC-Schutz bekannt.

Allen erwähnten Dokumenten ist gemein, dass der Schutz durch komplette Umhüllung erreicht wird.

US 2013/099005 A1 offenbart eine Kreditkartenabschirmung, wobei eine erste und eine zweite Abdeckung Informationen auf einer persönlichen Karte in einem Kartenhalter umgebend schützen, indem sie die Karte zwischen sich aufnehmen. Die Abschirmung kann aus Aluminium, Edelstahl, Kupfer, Messing oder anderen nicht-magnetischen Materialien ausgebildet sein.

US 2007/289775 A1 beschreibt eine Abschirmvorrichtung zum Verhindern eines ungewollten elektronischen Zugangs zu RFID Vorrichtungen in Kreditkarten etc.. Schichten aus elektromagnetischem Abschirmmaterial umgeben die Karten.

US 2009/067150 A1 betrifft eine Schutzschicht zum Verhindern des Auslesens von Daten, bestehend aus einer Aluminiumfolienschicht und einer Kunststoffschicht, die einen Beutel bilden, dessen Innenraum vor dem ungewollten Auslesen von Daten geschützt ist.

### DARSTELLUNG DER ERFINDUNG

Der Erfinder hat erkannt, dass die komplette Umhüllung des den RFID/NFC Transponder tragenden Gegenstands nachteilig ist. Insbesondere bedeutet die vollständige Umhüllung, dass ein Benutzer einen verhältnismäßig hohen Aufwand betreiben muss, um den Gegenstand betriebsbereit zu machen. Bei einer Kreditkarte beispielsweise muss zunächst die Hülle mit der darin befindlichen Karte aus einem Portemonnaie und anschließend noch die Karte aus der Hülle entnommen werden. Dieser zusätzliche Aufwand führt dazu, dass die bekannten Hüllen nicht konsequent verwendet werden und die Transponder häufig ungeschützt transportiert werden. Dazu kommt, dass bei mehreren Chipkarten etc., das Volumen des Portemonnaies massiv zunimmt.

Vor diesem Hintergrund besteht die Aufgabe der vorliegenden Erfindung darin, eine einfache und kostengünstige Vorrichtung zum Schutz vor Datendiebstahl, Identitäts- und Zahlungsbetrug bei kontaktloser Datenübertragung via elektromagnetischer Funkwellen bereitzustellen, welche die vorstehend beschriebenen Nachteile des Stands der Technik überwindet. Insbesondere besteht die Aufgabe darin, eine flexibler einsetzbare Vorrichtung bereitzustellen, die von einem Benutzer leichter benutzbar und daher zuverlässiger ist. Insbesondere besteht die Aufgabe noch darin, eine Vorrichtung bereitzustellen, die unabhängig von einer speziellen Ausgestaltung des NFC/RFID Funkchip Trägers, z. B. der Kreditkarte, ist.

Diese Aufgabe wird durch die Vorrichtung gemäß Anspruch 1 und die Verwendung nach Anspruch 12 gelöst. Vorteilhafte Ausgestaltungen der Erfindung ergeben sich aus den Unteransprüchen.

Der unbefugte Zugriff auf Daten eines NFC/RFID Funkchips wird durch ein elektrisch leitendes dünnes Pad, das beispielsweise ein Metallelement oder ein Metall oder Kohlenstoff, insbesondere Graphit, vorzugsweise flächig, auch unterbrochen flächig in Form von Streifen oder Mustern, aufweisender Gegenstand sein kann, verhindert. Unter einem flächigen, elektrisch leitfähigen Gegenstand wird ein Gegenstand, verstanden, dessen Ausdehnung in einer Fläche, die auch gebogen oder geknickt sein kann, um mindestens eine Größenordnung größer ist als seine Ausdehnung in einer auf die Fläche senkrecht stehenden Richtung. Ebenso hindert eine elektrisch leitende Farbschicht das Auslesen. Das Pad kann zur Erhöhung seiner Stabilität aus Kunststoff, dickeres Papier, Karton etc. aufweisen. Wichtig ist eine elektrisch leitende Schicht dazwischen oder auf mindestens einer der Seiten. Die leitende Schicht kann auch in Streifen ausgeführt sein. Ein besonders effektiver Schutz vor elektromagnetischen Funkwellen wird durch eine Graphitbeschichtung erreicht.

Um z.B. eine Herren-Brieftasche zu schützen kann ein Schutzstreifen auf die Grösse des innersten Faches zugeschnitten und ebendort eingeschoben werden. Wenn die Brieftasche zugeklappt wird, ist automatisch die Vorder- und Rückseite vor unbefugtem Zugriff geschützt.

Analog kann z.B. bei einem Pass vorgegangen werden. Auf den Innenseiten der "Deckel" des Passes kann das Pad, welches leicht haftend ausgeführt sein kann, eingelegt und befestigt werden. Ist der Pass zugeklappt, wird das Innere vor unbefugtem Ausspähen geschützt.

Weitere Vorteile und Merkmale der Erfindung ergeben sich aus der nachfolgenden Figurenbeschreibung und der Gesamtheit der Ansprüche.

### KURZE FIGURENBESCHREIBUNG

Figur 1 zeigt eine Brieftasche ohne einen Schutz vor elektromagnetischen Funkwellen.
Figur 2 zeigt die Brieftasche aus Figur 1 mit einer bevorzugten Ausführungsform des Funkwellenschutzes, der zu Illustrationszwecken zu 2/3 in die Brieftasche eingeschoben ist.

### WEGE ZUR AUSFÜHRUNG DER ERFINDUNG

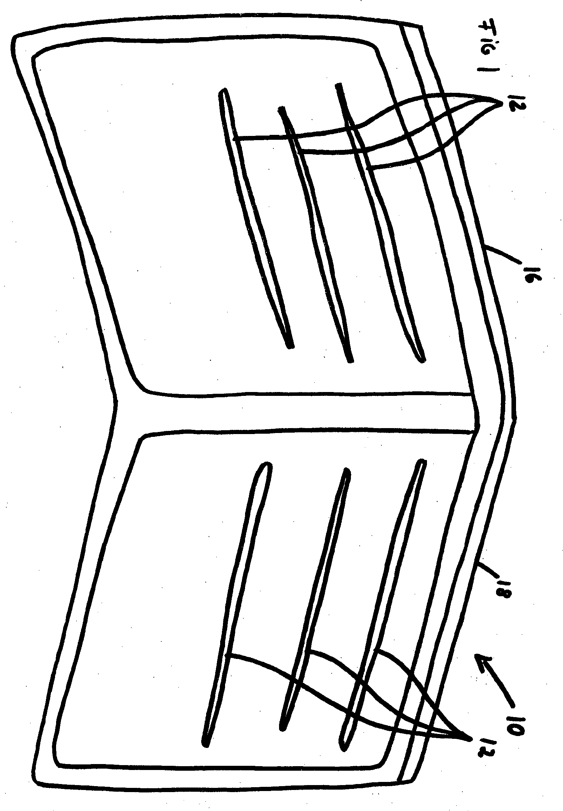

Figur 1 zeigt eine herkömmliche Brieftasche 10 mit sechs Innentaschen 12 für Gegenstände, beispielsweise Kreditkarten, Maestrokarten, Geldkarten, Zutrittskarten für Gebäude oder Parkhäuser, Führerschein, Personalausweis oder ähnliche Karten, die mit einem RFID- oder NFC-Chip ausgestattet sein können. Diese Innentaschen 12 sind in geöffnetem Zustand der Brieftasche 10, der in Figur 1 gezeigt ist, durch einen Benutzer direkt zugänglich. Hinter den Innentaschen 12, d. h. in geschlossenem Zustand die Innentaschen von außen einschließend, sind zwei Flächen 16, 18 definiert.

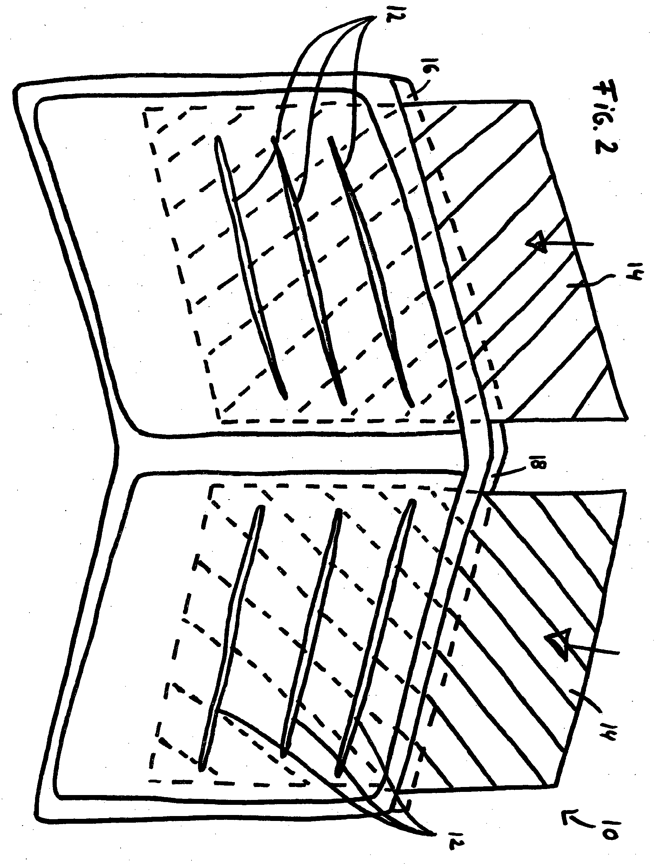

Figur 2 zeigt die Brieftasche 10 aus Figur 1 in einer bevorzugten Ausführungsform der vorliegenden Erfindung. Danach ist auf den zwei Flächen 16, 18 jeweils eine elektrisch leitfähige Schicht in Form zweier Schutzelemente 14, die Beispiele elektrisch leitfähiger, flächiger Gegenstände sind, so angeordnet, dass die Innentaschen 12 und die sich darin befindlichen Karten gegenüber elektromagnetischen Funkwellen durch die Flächen 16, 18 von außen abgeschirmt sind, wenn die Brieftasche geschlossen ist. Statt der in Figur 2 gezeigten Schutzelemente 14 können auch andere zumindest teilweise elektrisch leitende Gegenstände eingesetzt werden, die vorzugsweise elastisch ausgebildet werden können. Ein gut funktionierendes Beispiel ist Graphit.

Die Schutzelemente 14 weisen bevorzugt eine Folie auf, auf die je nach Anwendung eine oder mehrere Schichten aus verschiedenen Materialien jeweils unterschiedlicher Leitfähigkeit, Permeabilität und Permittivität aufgedampft sein können. Die Schichtdicke und die Abfolge der Materialien ändert die elektromagnetischen Eigenschaften des Endprodukts. Damit lässt sich bewirken, dass gezielt bestimmte Frequenzbänder gedämpft werden können. So ist es beispielsweise möglich, elektromagnetische Strahlung im Megahertzbereich effektiv abzuschirmen, während solche im Kilohertzbereich durch die Schutzelemente 14 dringen kann. So kann ein Auslesen von NFC Elementen, die üblicherweise in einer Frequenz von 13,56 MHz ausgelesen werden, vermieden werden, während RFID-Tags, deren Arbeitsfrequenz im Kilohertzbereich liegt, weiterhin funktionieren.

In einer besonders bevorzugten Ausführungsform ist auf eine Folie eine 35 nm bis 50 nm, bevorzugt 40 nm dicke Aluminiumschicht aufgedampft, darauf eine Polyesterschicht einer weitgehend beliebigen Dicke aufgebracht, dann wieder eine 35 nm bis 50 nm, bevorzugt 40 nm dicke Aluminiumschicht aufgedampft, darauf wieder eine Polyesterschicht einer weitgehend beliebigen Dicke aufgebracht und darauf wieder eine 35 nm bis 50 nm, bevorzugt 40 nm dicke Aluminiumschicht aufgedampft. Somit weist das Schutzelement 14 vorzugsweise drei Aluminiumschichten einer Dicke von jeweils 35 nm bis 50 nm, bevorzugt 40 nm auf, die voneinander durch je eine Polyesterschicht getrennt sind. Auf die außenliegende Aluminiumschicht oder die außenliegenden Aluminiumschichten kann eine weitere Schicht, beispielsweise aus Polyester aufgebracht sein, um das Aluminium zu schützen. Ferner ist es möglich eine Graphitschicht zusätzlich vorzusehen, auf der insbesondere eine RFID Antenne oder ein ganzer RFID Chip angeordnet werden kann, der durch das Graphit infolge seiner Anisotropie von den Aluminiumschichten elektrisch getrennt ist. Die Anisotropie des Graphits bedeutet im vorliegenden Zusammenhang, dass eine Graphitschicht entlang der einzelnen Schichten des Graphits elektrisch leitet, während sie senkrecht zu ihren einzelnen Schichten elektrisch isoliert. Die Graphitschicht ist dabei bevorzugt zumindest 150µm dick.

Insgesamt ergibt sich dabei vorzugsweise eine kumulierte Schichtdicke des Aluminiums oder eines anderen leitfähigen Materials von zwischen 70 nm und 200 nm, besonders bevorzugt von zwischen 100 nm und 150 nm.

In einer alternativen bevorzugten Ausführungsform wird auf eine Polyesterschicht beidseitig jeweils eine Aluminiumschicht einer Dicke von zwischen 35 nm und 100 nm, bevorzugt von 50 nm aufgebracht.

Das Schutzelement 14 soll bevorzugt eine Gesamtdicke von zwischen 80 µm und 150 µm aufweisen, so dass es gut handhabbar ist.

In Figur 2 sind die Schutzelemente 14 in einem zu zwei Dritteln in die Brieftasche 10 eingeschobenem Zustand abgebildet, um die Schutzelemente14 besser sichtbar zu machen. Es ist für die fertige Ausführungsform vorgesehen, dass die Schutzelemente 14 vollständig in die Brieftasche 10 eingeschoben sind, damit der Schutz aller in den Innentaschen 12 befindlicher Karten gewährleistet ist.

Abweichend von dem in Figur 2 gezeigten Ausführungsbeispiel ist es beispielsweise auch möglich, dass ein Schutzelement 14 an einem Stück ausgeführt ist. Alternativ oder zusätzlich ist es auch denkbar, dass von außen auf der Brieftasche Schutzelemente angebracht, beispielsweise aufgeklebt, genäht, gedampft oder anderweitig befestigt sind. Oder elektrisch leitende Farben oder Materialien aufgedampft oder gedruckt werden.

In einer bevorzugten Ausführungsform umfasst das Schutzelement 14 eine Kunststoffbasisschicht, darauf eine Aluminium oder Kupferfolie und darauf eine Graphitschicht, wobei die Reihenfolge dieser Schichten auch verändert werden kann.

Alternativ zu der abgebildeten Brieftasche kann das Behältnis beliebige andere Formen annehmen.

## Patentansprüche

1. Behältnis (10) mit mehreren Innentaschen (12) zur Aufnahme von mit jeweils einem RFID- oder NFC-Chip ausgestatteten Gegenständen, wobei das Behältnis (10) auf zumindest zwei Flächen (16, 18), die zumindest eine der mehreren Innentaschen (12) einschließen, mit jeweils einem elektrisch leitfähigen Schicht (14) versehen ist, so dass die zumindest eine der mehreren Innentaschen (12) gegenüber elektromagnetischen Funkwellen durch die zumindest zwei Flächen (16, 18) abgeschirmt ist,
**dadurch gekennzeichnet, dass**
die elektrisch leitfähige Schicht (14) eine mehrlagige Schicht ist, die mehrere Schichten mit Aluminium und dazwischen jeweils eine Polyesterschicht aufweist.

2. Behältnis (10) nach Anspruch 1, wobei die zumindest zwei Flächen (16, 18) mehrere, bevorzugt alle Innentaschen (12) des Behältnisses (10) einschließen.

3. Behältnis (10) nach einem der vorhergehenden Ansprüche, wobei mehrere, bevorzugt alle der jeweiligen elektrisch leitfähigen Schichten (14) der zumindest zwei Flächen (16, 18) einstückig miteinander ausgebildet sind.

4. Behältnis (10) nach einem der vorhergehenden Ansprüche, das eine Brieftasche, ein Portemonnaie, eine Wertkartentasche oder eine Reisepasstasche zur Aufnahme mehrerer mit einem RFID- oder NFC-Chip ausgestatteter Gegenstände ist.

5. Behältnis (10) nach einem der vorhergehenden Ansprüche, wobei die elektrisch leitfähige Schicht (14) eine Dicke von insgesamt zwischen 80 nm und 150 nm aufweist.

6. Behältnis (10) nach einem der vorhergehenden Ansprüche, wobei die elektrisch leitfähige Schicht (14) eine kumulierte Dicke von Aluminium von zwischen 70 nm und 200 nm, bevorzugt von zwischen 100 nm und 150 nm aufweist.

7. Behältnis (10) nach einem der vorhergehenden Ansprüche, wobei die elektrisch leitfähige Schicht (14) drei Schichten mit Aluminium und dazwischen jeweils eine Polyesterschicht aufweist.

8. Behältnis (10) nach einem der vorhergehenden Ansprüche, wobei ferner eine Polyesterschicht auf einer Außenseite einer der Schichten aus Aluminium angeordnet ist.

9. Behältnis (10) nach einem der vorhergehenden Ansprüche, wobei ferner eine Graphitschicht auf einer Außenseite einer der Schichten aus Aluminium angeordnet ist.

10. Behältnis (10) nach einem der vorhergehenden Ansprüche, wobei die elektrisch leitende Schicht (14) Graphit aufweist und wobei auf dem Graphit eine oder mehrere Antennen eines oder mehrerer RFID Chips angeordnet sind.

11. Behältnis (10) nach einem der vorhergehenden Ansprüche, wobei die elektrisch leitfähige Schicht (14) zwei Elemente in einer um maximal 10% von einer Kreditkartengröße abweichenden Größe umfasst, die auf gegenüberliegenden Seiten einer Unterbringung für Kreditkarten in dem Behältnis (10) angeordnet sind.

12. Verwendung einer elektrisch leitfähigen Schicht (14) zur gleichzeitigen Abschirmung einer Mehrzahl von Gegenständen, die in einem Behältnis (10) mit mehreren Innentaschen (12) aufgenommenen und mit jeweils einem RFID- oder NFC-Chip ausgestattet sind, gegenüber elektromagnetischen Funkwellen von außerhalb des Behältnisses (10),
**dadurch gekennzeichnet, dass**
die elektrisch leitfähige Schicht (14) eine mehrlagige Schicht ist, die mehrere Schichten mit Aluminium und dazwischen jeweils eine Polyesterschicht aufweist.

13. Verwendung einer elektrisch leitfähigen Schicht (14) nach Anspruch 12, wobei die elektrisch leitfähige Schicht (14) selbstklebend ausgebildet ist
und/oder
wobei die elektrisch leitfähige Schicht (14) auf einem Substrat aufgebracht, insbesondere aufgedampft oder aufgeklebt ist, wobei das Substrat ein Kunststoff, Papier, Karton oder dergleichen ist und/oder
wobei die elektrisch leitfähige Schicht (14) zwischen zwei flächigen Substraten eingebracht ist.

14. Verwendung einer elektrisch leitfähigen Schicht (14) nach einem der Ansprüche 12 und 13, wobei die elektrisch leitfähige Schicht (14) von einem Benutzer auf eine Form und Größe des Behältnisses (10) zuschneidbar und/oder faltbar ist.

15. Verwendung einer elektrisch leitfähigen Schicht (14) nach einem der Ansprüche 12 bis 14 für ein Behältnis (10) nach einem der Ansprüche 1 bis 11.

## Claims

1. Receptacle (10) having several inner pockets (12) for accommodating objects in each case equipped with an RFID or NFC chip, wherein the receptacle (10) is provided on at least two surfaces (16, 18) which enclose at least one of the several inner pockets (12) with in each case an electrically conductive layer (14), so that the at least one of the several inner pockets (12) is shielded from electromagnetic radio waves through the at least two surfaces (16, 18),
**characterised in that**
the electrically conductive layer (14) is a multilayered layer which comprises several layers with aluminium and in each case an interposed polyester layer.

2. Receptacle (10) according to claim 1, wherein the at least two surfaces (16, 18) enclose several, preferably all inner pockets (12) of the receptacle (10).

3. Receptacle (10) according to one of the preceding claims, wherein several, preferably all the respective electrically conductive layers (14) of the at least two surfaces (16, 18) are formed integrally with one another.

4. Receptacle (10) according to one of the preceding claims which is a wallet, a purse, a credit card case or a passport cover for accommodating several objects equipped with an RFID or NFC chip.

5. Receptacle (10) according to one of the preceding claims, wherein the electrically conductive layer (14) has a total thickness of between 80 nm and 150 nm.

6. Receptacle (10) according to one of the preceding claims, wherein the electrically conductive layer (14) has a cumulative thickness of aluminium of between 70 nm and 200 nm, preferably of between 100 nm and 150 nm.

7. Receptacle (10) according to one of the preceding claims, wherein the electrically conductive layer (14) comprises three layers with aluminium and in each case an interposed polyester layer.

8. Receptacle (10) according to one of the preceding claims, wherein a polyester layer is further arranged on an outer side of one of the aluminium layers.

9. Receptacle (10) according to one of the preceding claims, wherein a graphite layer is further arranged on an outer side of one of the aluminium layers.

10. Receptacle (10) according to one of the preceding claims, wherein the electrically conductive layer (14) comprises graphite and wherein one or more antennas of one or more RFID chips are arranged on the graphite.

11. Receptacle (10) according to one of the preceding claims, wherein the electrically conductive layer (14) comprises two elements, in a size deviating by a maximum of 10% from the size of a credit card, which are arranged on opposite sides of an accommodation for credit cards in the receptacle (10).

12. Use of an electrically conductive layer (14) for the simultaneous shielding of a plurality of objects which are accommodated in a receptacle (10) having several inner pockets (12) and which are in each case equipped with an RFID or NFC chip from electromagnetic radio waves from outside of the receptacle (10), **characterised in that** the electrically conductive layer (14) is a multi-layered layer comprising several layers with aluminium and in each case an interposed polyester layer.

13. Use of an electrically conductive layer (14) according to claim 12, wherein the electrically conductive layer (14) is self-adhesive
and/or
wherein the electrically conductive layer (14) is applied, in particular vapour-deposited or adhesively bonded, to a substrate, wherein the substrate is a plastic, paper, card or the like and/or
wherein the electrically conductive layer (14) is introduced between two planar substrates.

14. Use of an electrically conductive layer (14) according to one of the claims 12 and 13, wherein the electrically conductive layer (14) can be cut and/or folded by a user to the form and size of the receptacle (10).

15. Use of an electrically conductive layer (14) according to one of the claims 12 to 14 for a receptacle (10) according to one of the claims 1 to 11.

## Revendications

1. Récipient (10) comportant plusieurs poches intérieures (12) destinées à recevoir des objets équipés chacun d'une puce RFID ou NFC, le récipient (10) étant équipé, sur au moins deux surfaces (16, 18), qui incluent au moins une des multiples poches intérieures (12), respectivement d'une couche électroconductrice (14), de sorte que la au moins une des multiples poches intérieures (12) est protégée contre les ondes radio électromagnétiques par les au moins deux surfaces (16, 18),
**caractérisé en ce que**
la couche électroconductrice (14) est une couche multicouche qui présente plusieurs couches avec de l'aluminium et une couche de polyester entre celles-ci.

2. Récipient (10) selon la revendication 1, dans lequel les au moins deux surfaces (16, 18) incluent plusieurs poches intérieures (12) du récipient (10), de préférence la totalité d'entre elles.

3. Récipient (10) selon l'une quelconque des revendications précédentes, dans lequel plusieurs couches électroconductrices respectives (14), de préférence la totalité d'entre elles, des au moins deux surfaces (16, 18) sont formées d'un seul tenant les unes avec les autres.

4. Récipient (10) selon l'une quelconque des revendications précédentes, lequel est un portefeuille, un porte-monnaie, un porte-cartes électronique ou une pochette pour passeport destiné(e) à contenir plusieurs objets équipés d'une puce RFID ou NFC.

5. Récipient (10) selon l'une quelconque des revendications précédentes, dans lequel la couche électroconductrice (14) présente une épaisseur totale comprise entre 80 nm et 150 nm.

6. Récipient (10) selon l'une quelconque des revendications précédentes, dans lequel la couche électroconductrice (14) présente une épaisseur cumulée d'aluminium comprise entre 70 nm et 200 nm, de préférence entre 100 nm et 150 nm.

7. Récipient (10) selon l'une quelconque des revendications précédentes, dans lequel la couche électroconductrice (14) présente trois couches avec de l'aluminium et une couche de polyester entre celles-ci.

8. Récipient (10) selon l'une quelconque des revendications précédentes, dans lequel une couche de polyester est en outre agencée sur un côté extérieur d'une des couches en aluminium.

9. Récipient (10) selon l'une quelconque des revendications précédentes, dans lequel une couche de graphite est en outre agencée sur un côté extérieur d'une des couches en aluminium.

10. Récipient (10) selon l'une quelconque des revendications précédentes, dans lequel la couche électroconductrice (14) présente du graphite et dans lequel une ou plusieurs antennes d'une ou plusieurs puces RFID sont agencées sur le graphite.

11. Contenant (10) selon l'une quelconque des revendications précédentes, dans lequel la couche électroconductrice (14) comprend deux éléments d'une dimension qui ne diffère pas de plus de 10 % d'une dimension de carte de crédit, lesquels sont agencés sur des côtés opposés d'un logement de cartes de crédit dans le récipient (10).

12. Utilisation d'une couche électroconductrice (14) pour protéger simultanément une pluralité d'objets qui sont logés dans un récipient (10) doté de plusieurs poches intérieures (12) et sont équipés chacun d'une puce RFID ou NFC à l'encontre des ondes radio électromagnétiques provenant de l'extérieur du récipient (10),
**caractérisée en ce que**
la couche électroconductrice (14) est une couche multicouche qui présente plusieurs couches avec de l'aluminium et une couche de polyester entre celles-ci.

13. Utilisation d'une couche électroconductrice (14) selon la revendication 12, la couche électroconductrice (14) étant auto-adhésive
et/ou
la couche électroconductrice (14) étant appliquée sur un substrat, en particulier déposée en phase vapeur ou collée, le substrat étant en plastique, en papier, en carton ou similaires et/ou
la couche électroconductrice (14) étant ménagée entre deux substrats plats.

14. Utilisation d'une couche électroconductrice (14) selon l'une quelconque des revendications 12 et 13, dans laquelle la couche électroconductrice (14) peut être coupée et/ou pliée par un utilisateur à une forme et à une dimension du contenant (10).

15. Utilisation d'une couche électroconductrice (14) selon l'une quelconque des revendications 12 à 14 pour un récipient (10) selon l'une quelconque des revendications 1 à 11.
